Europäisches Patentamt

European Patent Office

Office européen des brevets

(19)

(11) Veröffentlichungsnummer: **0 041 759**

**A1**

(12) **EUROPÄISCHE PATENTANMELDUNG**

(21) Anmeldenummer: 81200615.3

(22) Anmeldetag: 03.06.81

(51) Int. Cl.³: **C 08 F 8/44**

(30) Priorität: 11.06.80 DE 3021838 .

(43) Veröffentlichungstag der Anmeldung:
16.12.81 Patentblatt 81/50

(84) Benannte Vertragsstaaten:
BE CH DE FR GB IT LI LU NL SE

(71) Anmelder: CHEMISCHE WERKE HÜLS AG
Postfach 1320
D-4370 Marl 1(DE)

(72) Erfinder: Gude, Fritz, Dr.
Wilhelmstrasse 4
D-4690 Herne 2(DE)

(72) Erfinder: Haferkorn, Herbert
Horster Strasse 528
D-4250 Bottrop(DE)

(74) Vertreter: Steil, Hanna, Dipl.-Chem.
RSP PATENTE - PB 40 Herzogstrasse 28 Postfach 2840
D-4690 Herne 2(DE)

(54) Verfahren zur Herstellung von wässrigen Salzlösungen der Copolymerisate aus Maleinsäureanhydrid mit Olefinen bzw. deren Gemische.

(57) Wäßridge Salzlösungen von Copolymerisaten aus Maleinsäureanhydrid und Olefinen, bzw. Olefingemischen, — beispielsweise zur Verwendung als Papierleimungsmittel — lassen sich aus den aromatenfeuchten Polymerisaten durch Extraktion mit einem Gemisch von wäßrigen Alkalien, vorzugsweise von Ammoniaklösungen, und wasserunlöslichen, aliphatischen oder cycloaliphatischen Alkoholen, gegebenenfalls in Gegenwart von aliphatischen oder cycloaliphatischen Kohlenwasserstoffen, abtrennen.

EP 0 041 759 A1

## Verfahren zur Herstellung von wässrigen Salzlösungen der Copolymerisate aus Maleinsäureanhydrid mit Olefinen bzw. deren Gemische

Bei allen Polymerisationsreaktionen in Lösung bevorzugt man im allgemeinen solche Lösungsmittel für die monomeren Verbindungen, aus denen die Polymerisate nach der Reaktion schwerlöslich ausfallen. Will man nun Maleinsäureanhydrid mit Olefinen radikalisch polymerisieren, führt ausschließlich der Einsatz aromatischer Lösungsmittel zu dem gewünschten Ergebnis. Deshalb finden sich in der Literatur viele Publikationen über diese Arbeitsweise.

So wurde schon vor längerer Zeit beschrieben, z.B. Maleinsäureanhydrid mit Styrol in Benzol zu polymerisieren.

Weiter geht aus der DE-OS 2 727 510 hervor, daß man Copolymerisate aus Maleinsäureanhydrid und Dicyclopentadien in Toluol herstellen kann. Nach Trocknung des ausgefallenen Produktes setzt man es mit Ammoniak oder primären oder sekundären Aminen um und verwendet die wässrige Lösung als Oberflächenleimungsmittel für Papier.

In der DE-OS 2.943 980 wird bei der Copolymerisation von Maleinsäureanhydrid, Dicyclopentadien und Cyclooctadien und in der DE-OS 2 939 293 bei der Copolymerisation von Maleinsäureanhydrid, Dicyclopentadien und Vinylcyclohexen Cumol als Lösungsmittel verwendet. In beiden Schutzrechten empfielt man die wässrig-alkalischen Lösungen der Copolymerisate als Papierleimungsmittel.

Die DE-OS 2 941 589 behandelt die besonderen Vorteile von Aromaten mit tert.-Butyl-Gruppen als Lösungsmittel bei den radikalisch initiierten Copolymerisationen von Maleinsäureanhydrid mit Olefinen.

Diesem positiven Verhalten der Aromaten steht nun leider die hartnäckige Quellung der Maleinsäureanhydrid-Olefin-Copolymerisate gerade in diesen Lösungsmitteln als gravierender Nachteil gegenüber. So hält z.B. das Copolymerisat aus Maleinsäureanhydrid und Dicyclopentadien das Cumol dermaßen stark zurück, daß man nach Abtrennen des Lösungsmittels nach der Polymerisationsreaktion noch 25 bis 40% Restfeuchte vorfindet.

Um überhaupt Lösungen der Copolymerisate aus Maleinsäureanhydrid mit ungesättigten Verbindungen, z.B. Dicyclopentadien, in wässrigen Alkalien herstellen zu können, war deshalb bis jetzt eine etwa 35 bis 45-stündige Trocknung bei annähernd 140°C und 40 mbar, gegebenenfalls unter Durchleiten von Wasserdampf bzw. Stickstoff erforderlich. Selbst danach sind noch 1-2% Aromaten, wie z.B. Cumol, im Copolymerisat als Restfeuchte nachzuweisen. Da eine Schädigung des Polymerisats bei der langen und hohen Temperaturbelastung auftritt, mußte die Trockentemperatur auf max. 120°C zurückgenommen werden. Dadurch erhöht sich die Trocknungszeit noch erheblich.

Als Alternative zur Trocknung bot sich die Wasserdampfdestillation des filterfeuchten Copolymerisates an. Um Substanzschädigungen zu vermeiden, wurde unter Normalbedingungen gearbeitet. Dabei mußten für 10 g Copolymerisat 3,5 bis 4 l Wasser überdestilliert werden, um den Aromatengehalt soweit zu senken, daß sich aus dem Copolymerisat mit wässrigen Alkalien eine einigermaßen klare Lösung herstellen ließ.

Es stellte sich nun überraschend heraus, daß man schonend, in sehr kurzer Zeit und auf wirtschaftliche Art klare, geruchsfreie alkalische Lösungen direkt aus den aromatenfeuchten Maleinsäureanhydrid-Copolymeren erhalten kann, wenn man die Copolymerisate in wässrigen Alkalien suspendiert und während dieser Maßnahmen mit in Wasser schwerlöslichen Alkoholen extrahiert.

Gegenstand der Erfindung ist daher ein Verfahren zur Herstellung von wässrigen Salzlösungen der Copolymerisate
aus Maleinsäureanhydrid und Olefinen bzw. deren Gemischen
nach der radikalischen Polymerisation bei Temperaturen
zwischen 60 + 150°C in aromatischen Lösungsmitteln, das
dadurch gekennzeichnet ist, daß man das aromatenfeuchte
Polymerisat durch Vermischen mit wässrigen Alkalien und
wasserunlöslichen aliphatischen und/oder cycloaliphatischen
Alkoholen in der wässrigen Phase löst.

Als Extraktionsmittel kommen aliphatische und/oder cycloaliphatische Alkohole mit 6-18 C-Atomen in Betracht.

In praxi kann man z.B. so verfahren, daß man das aromatenfeuchte Polymerisat (Restfeuchte etwa 30-80 Gew.%) mit der
doppelten bis 5-fachen Gewichtsmenge wasserunlöslichem
Alkohol und der für die Salzbildung ausreichenden Menge
an wässriger Alkali-Lösung versetzt und eine halbe bis
zwei Stunden zwischen 20°C und der Siedetemperatur des
Alkohols, bevorzugt 40-100°C, rührt, wobei die Salzbildung
erfolgt. Nach Abschalten des Rührers scheiden sich innerhalb von wenigen Minuten zwei Schichten ab. Die obere
Schicht besteht aus dem Alkohol, der das aromatische Restlösungsmittel gelöst enthält, während die untere Schicht
aus der alkalischen Lösung des Copolymerisates besteht,
die nach Abtrennung unmittelbar verwendungsfähig ist.

Es ist aber auch mit gleichem Erfolg möglich, zunächst das
filterfeuchte Copolymerisat bei 30-100°C in dem Alkohol
zu lösen, bzw. zu suspendieren und anschließend mit der
wässrigen alkalischen Lösung zur Reaktion zu bringen.

- 4 -

Die obere organische Schicht kann bei entsprechend großen Siedeunterschieden zwischen den Aromaten und den Alkoholen leicht durch Destillation oder Strippen aufgearbeitet werden. Grundsätzlich ist es möglich, sie mehrfach ohne Reinigung zu verwenden.

Als Extraktionsmittel kann man alle aliphatischen und cycloaliphatischen ein- oder mehrwertigen Alkohole mit 6-18 C-Atomen einsetzen, selbstverständlich ebenfalls ihre Gemische und ihre Lösungen in aliphatischen Kohlenwasserstoffen. Ferner sind auch technische Schnitte, wie z.B. die der Alfol-Alkohole in dem angegebenen Bereich, brauchbar.

Als alkalische Reaktionspartner für die Copolymerisate können wässrige Lösungen von primären, sekundären oder tertiären Aminen, quarternären Ammoniumhydroxiden, Ammoniak sowie die Hydroxide der 1. Hauptgruppe des Periodischen Systems einzeln oder in Gemischen dienen.

Zur Herstellung der Copolymerisate lassen sich als Reaktionsprodukte für das Maleinsäureanhydrid alle geeigneten Olefine und Diolefine bzw. deren Gemische,wie z.B.Dicyclopentadien, Dicyclopenten, Vinylcyclohexen, Cyclooctadien, Cyclododecatrien, Styrol, Ethylen, Propylen, Butylen usw., verwenden.

Die wässrig-alkalischen Lösungen gemäß dieser Erfindung kann man z.B. als anionische Oberflächenleimungsmittel für Papier, Verdickungsmittel, Emulgatoren usw. einsetzen.

Die in den folgenden Beispielen aufgeführten "Restfeuchten" wurden spektralphotometrisch nach folgender Methode ermittelt:

Zur Bestimmung von Aromaten in Maleinsäureanhydrid-Olefin-Copolymerisation wiegt man je nach dem zu erwartenden Aromatengehalt ca. 150 mg Probe in einen 100 ml fassenden Rundkolben ein. Nach Zugabe von 10 ml 1 n NaOH wird die Probe durch Erwärmen gelöst. Anschließend wird abgekühlt, die Lösung quantitativ in einen Scheidetrichter überführt und 2 x mit je 20 ml reinstem Cyclohexan extrahiert. Die vereinigten Cyclohexanphasen sammelt man in einem 50 ml Meßkolben, der anschließend bis zur Marke aufgefüllt wird. Mit einem Spektralphotometer wird von dieser Lösung unter Verwendung einer 10 mm Küvette im UV-Spektrum die betreffende Extinktion gemessen und mittels einer vorher erstellten Eichkurve der Gehalt an dem betreffenden Aromaten in der Probe ermittelt.

Der $p_H$-Wert der wässrigen Lösungen wurde mit Merck'schem Universal-Indikator-Papier bestimmt.

Beispiele:
==========

A) Copolymerisat aus Maleinsäureanhydrid und Dicyclopentadien

1) Darstellung

Ein nach der D-OS 2 727 510 in Cumol aus einem Mol Maleinsäureanhydrid und einem Mol Dicyclopentadien hergestelltes Copolymerisat besaß nach Abtrennen des Lösungsmittels noch eine Restfeuchte von 32% Cumol. Die Ausbeute an Copolymerisat betrug 76% der Theorie.

2) Salzbildung

a) Je 27 g des unter 1) erhaltenen filterfeuchten Produktes wurde mit folgenden Alkoholen unter Rühren erwärmt:

I) n-Hexanol

II) Alfol-($C_8$-$C_{10}$)

III) 2-Ethylhexanol-(1)

IV) Isononanol

V) Isodekanol

VI) Isotridekanol

VII) Isomerengemisch aus 30 Gew.% 2,2,4- und 70 Gew.% 2,4,4-Trimethylhexandiol-(1,6)

Anschließend gab man wässriges Alkali hinzu und rührte weiter. Nach Ablauf der unten angegebenen Reaktionszeit ließ man absitzen. Die untere Schicht, die einen $p_H$ von 8 aufwies, enthielt das gesamte Copolymerisat in Form eines in Wasser löslichen Salzes. Die obere organische Schicht bestand aus der Lösung des Cumols in dem betreffenden Alkohol. Weitere Einzelheiten gehen aus der nachfolgenden Tabelle hervor:

| Alkohol | Menge [cm³] | Temp. [°C] | Lösungs- zeit [min] | Alkali | Menge [cm³] | Temp. [°C] | Reaktions- zeit [min] | Absitzzeit d. Schichten |
|---|---|---|---|---|---|---|---|---|
| I | 65 | 20 | 60 | 6%iges wässr. NH₃ | 130 | 70 | 60 | 10min/60°C |
| II | 100 | 70 | 30 (keine vollst.Lsg.) | " | " | 70 | 30 | 15min/70°C |
| III | 65 | 60 | 15 | " | " | 70 | 30 | 8min/60°C |
| IV | 80 | 80 | 15 | " | " | 80 | 30 | 15min/60°C |
| V | 95 | 80 | 10 | " | " | 60 | 60 | 30min/60°C |
| VI | 60 | 70 | 30 | " | " | 70 | 20 | 15min/70°C |
| VII | 100 | 80 | 30 (keine vollst.Lsg.) | " | " | 80 | 30 | 5min/80°C |
| VI | 60 | 70 | 60 | 4,5%iges wässr. LiOH | " | 70 | 30 | 30min/70°C |
| VI | 60 | 70 | 60 | 9,5%iges wässr. KOH | " | 70 | 30 | 60min/70°C |
| VI | 60 | 70 | 60 | 6,7%iges wässr. NaOH | " | 70 | 30 | 60min/70°C |
| III | 95 | 70 | 15 | 11%iger wässr. Aminoethanol | " | 70 | 30 | 10min/70°C |
| V | 95 | 85 | 10 | 14%iges wässr. Morpholin | " | 70 | 30 | 7min/70°C |

b) 30 g nach A 1) erhaltenes filterfeuchtes Copolymerisat wurde eine Stunde mit 70 cm$^3$ 2-Ethyl-Hexanol-(1) und 6%igem Ammoniak bei 70$^\circ$C gerührt. Nach dieser Behandlung setzten sich in wenigen Minuten zwei Schichten ab. Die untere Schicht enthielt die gesamte eingesetzte Copolymerisatmenge als Ammoniumsalz in Wasser gelöst. Die obere Schicht bestand aus dem eingesetzten Alkohol und Cumol.

Gleiche Ergebnisse konnten unter analogen Bedingungen auch mit dem übrigen, unter 2a) aufgeführten Alkoholen erreicht werden.

c) Vergleichsversuch

30 g unter A 1) hergestelltes filterfeuchtes Copolymerisat wurde vier Stunden bei 70$^\circ$C mit 125 cm$^3$ 6%igem Ammoniakwasser intensiv gerührt, wobei eine Suspension entstand. Nach tagelangem Stehen setzte sich eine geringe Menge Cumol als organische Schicht ab. Eine Lösung der festen, gequollenen Substanz in dem Ammoniakwasser konnte nicht festgestellt werden.

Bei Wiederholung des Versuchs unter Zusatz von 70 m$^3$ Benzin (Siedepunkt 100-140$^\circ$C) war es ebenfalls nicht möglich, das Polymerisat im wässrigen Ammoniak zu lösen.

B) Copolymerisat aus Maleinsäureanhydrid, Vinylcyclohexen und Dicyclopentadien

1) Darstellung

Nach der DE-OS 2 939 293 wurde ein Copolymerisat aus 1 Mol Maleinsäureanhydrid, 1/2 Mol Vinylcyclohexen-(3) und 1/2 Mol Dicyclopentadien in tert.-Butylbenzol als Lösungsmittel hergestellt. Die Ausbeute betrug 74% der Theorie. Die fest ausgefallene Substanz besaß nach der Filtration noch eine Restfeuchte von 51%.

2) Salzbildung

37 g des oben hergestellten Copolymerisates, 100 $cm^3$ Isononanol und 130 $cm^3$ 6%iges wässriges Ammoniak wurden 30 Minuten bei 70°C gerührt. Anschließend trennten sich die beiden Schichten klar innerhalb von 10 Minuten. Die untere wässrige Schicht enthielt das gesamte Copolymerisat als Ammoniumsalz.

C) Copolymerisat aus Maleinsäureanhydrid, Vinylcyclohexen, Cyclooctadien und Cyclododecatrien

1) Darstellung

1 Mol Maleinsäureanhydrid wurde mit einem Gemisch aus 0,4 Mol 1-Vinylcyclohexen-(3), 0,5 Mol cis, cis-Cyclooctadien-(1,5) und 0,1% cis,trans,trans-Cyclododecatrien-(1,5,9) in tert.-Butylbenzol analog DE-OS 2 939 293 radikalisch polymerisiert. Die Ausbeute an Copolymerisat betrug 79% der Theorie. Das ausgefallene feste Produkt enthielt nach der Filtration noch 59% tert.-Butylbenzol als Restfeuchte.

2) Salzbildung

a) 26 g filterfeuchtes, nach C 1) gewonnenes Copolymerisat, 54 $cm^3$ Cyclohexanol, 10 $cm^3$ Benzin (Siedepunkt 100-140°C) und 65 $cm^3$ 6%iges Ammoniak wurde bei 70°C 30 Minuten gerührt. Nach Abschalten des Rührers schieden sich innerhalb von 10 Minuten zwei Schichten ab. Die untere wässrige Schicht war anfangs trübe, klärte sich aber nach 2 Stunden bei einer Temperatur von 70°C. Sie enthielt praktisch das gesamte Copolymerisat als Ammoniumsalz.

b) Unter gleichen Bedingungen wie unter C 2a) beschrieben konnte beim Einsatz von Alfol-Alkohol-(8-10) eine saubere klare Schichtentrennung nach 15 Minuten erzielt werden.

D) Copolymerisat aus Maleinsäureanhydrid und Styrol

1) Darstellung

Das Copolymerisat wurde nach "Braun, Cherdron und Kern, Praktikum der Makromolekularen Chemie, (1971), S. 220" in Benzol hergestellt. Nach der Polymerisation besaß es noch eine Restfeuchte von 78 %.

2) Salzbildung

23 g unter D 1) hergestelltes Copolymerisat, 110 cm$^3$ 2-Ethylhexanol-(1) und 100 cm$^3$ wässriges 6%iges Ammoniak wurde 2 Stunden bei 80°C gerührt. Danach trennte sich die wässrige von der organischen Schicht innerhalb von 35 Minuten. Die wässrige Schicht enthielt das Ammoniumsalz des Copolymerisats.

- 1 -

Patentansprüche:

1. Verfahren zur Herstellung von wässrigen Salzlösungen der Copolymerisate aus Maleinsäureanhydrid und Olefinen bzw. deren Gemischen nach der radikalischen Polymerisation bei Temperaturen zwischen 60 + 150°C in aromatischen Lösungsmitteln, dadurch gekennzeichnet, daß man das aromatenfeuchte Polymerisat durch Vermischen mit wässrigen Alkalien und wasserunlöslichen aliphatischen und/oder cycloaliphatischen Alkoholen in der wässrigen Phase löst.

2. Verfahren nach Anspruch 1, dadurch gekennzeichnet, daß man das aromatenfeuchte Copolymerisat zunächst in den Alkoholen löst bzw. es darin suspendiert und die Lösung bzw. Suspension anschließend mit wässrigen Alkalien mischt.

3. Verfahren nach Anspruch 1 und 2, dadurch gekennzeichnet, daß man die Alkohole im Gemisch mit aliphatischen und/oder cycloaliphatischen Kohlenwasserstoffen verwendet.

4. Verfahren nach Anspruch 1-3, dadurch gekennzeichnet, daß man als wässriges Alkali eine wässrige Ammoniak-Lösung verwendet.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 179 764 (REICHHOLD-ALBERT-CHEMIE) <br><br> * Anspruch 1; Seite 3, Zeile 23 - Seite 4, Zeile 9; Seite 4, Zeile 38 - Seite 5, Zeile 8; Seite 6 - Seite 7, Zeile 28 * <br><br> & DE - A - 2 215 268 <br><br> -- | 1-3 |
| X | US - A - 3 342 787 (I.E. MUSKAT) <br> * Ansprüche 1,7; Beispiel 6 * <br><br> -- | 1,2,4 |
| | US - A - 3 030 342 (H.E. TIEFENTHAL) <br> * Anspruch 1 * <br><br> -- | 1 |
| | DE - A - 2 338 642 (HOECHST) <br> * Anspruch 1 * <br><br> ----- | 1,2,4 |

**KLASSIFIKATION DER ANMELDUNG (Int. Cl.³)**

C 08 F 8/44

**RECHERCHIERTE SACHGEBIETE (Int. Cl.³)**

C 08 F 8/44

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-09-1981 | PERMENTIER |

EPA form 1503.1 06.78